(19) Europäisches Patentamt
European Patent Office
Office européen des brevets

(11) **EP 4 394 944 A1**

(12) **EUROPEAN PATENT APPLICATION**
published in accordance with Art. 153(4) EPC

(43) Date of publication:
**03.07.2024 Bulletin 2024/27**

(21) Application number: **21967537.8**

(22) Date of filing: **14.12.2021**

(51) International Patent Classification (IPC):
$H01M\ 4/525$ (2010.01)   $H01M\ 4/52$ (2010.01)
$H01M\ 4/505$ (2010.01)   $H01M\ 4/50$ (2010.01)
$H01M\ 10/0525$ (2010.01)

(52) Cooperative Patent Classification (CPC):
Y02E 60/10

(86) International application number:
**PCT/CN2021/137773**

(87) International publication number:
**WO 2023/108397 (22.06.2023 Gazette 2023/25)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Zhangwan Town, Jiaocheng District
Ningde City
Fujian 352100 (CN)**

(72) Inventors:
• **PENG, Gang
Ningde City, Fujian 352100 (CN)**
• **LANG, Ye
Ningde City, Fujian 352100 (CN)**

(74) Representative: **Icosa
83 avenue Denfert-Rochereau
75014 Paris (FR)**

(54) **POSITIVE ELECTRODE ACTIVE MATERIAL, ELECTROCHEMICAL DEVICE, AND ELECTRONIC DEVICE**

(57)    This application provides a positive active material, an electrochemical device, and an electronic device. The positive active material includes a matrix and a first material existing on a surface of the matrix. The matrix includes a core and a shell layer. An interplanar spacing d1 of a (003) plane of the first material is less than an interplanar spacing d2 of a (003) plane of the core. By controlling the interplanar spacing d1 of the (003) plane of the first material to be less than the interplanar spacing d2 of the (003) plane of the core, the structural stability of the surface of the positive active material can be improved, and an interfacial charge transfer resistance of the positive active material can be reduced, thereby helping to improve both cycle performance and kinetic performance of the electrochemical device.

FIG. 1

## Description

## TECHNICAL FIELD

This application relates to the electrochemical field, and in particular, to a positive active material, an electrochemical device, and an electronic device.

## BACKGROUND

Lithium-ion batteries are widely used in the fields such as wearable devices, smartphones, unmanned aerial vehicles, electric vehicles, and large-scale energy storage equipment by virtue of advantages such as a high energy density, a long cycle life, and no memory effect, and have become the most promising new green chemical power source in the world today. This imposes higher requirements on comprehensive performance of the lithium-ion batteries.

## SUMMARY

An objective of this application is to provide a positive active material, an electrochemical device, and an electronic device to improve cycle performance and kinetic performance of the electrochemical device.

A first aspect of this application provides a positive active material. The positive active material includes a matrix and a first material existing on a surface of the matrix. The matrix includes a core and a shell layer. An interplanar spacing d1 of a (003) plane of the first material is less than an interplanar spacing d2 of a (003) plane of the core. The interplanar spacing d1 of the (003) plane of the first material is controlled to be less than the interplanar spacing d2 of the (003) plane of the core. On the one hand, the relatively small interplanar spacing d1 of the (003) plane of the first material reduces a risk of phase transition failure of an active crystal plane that provides a lithium ion channel at an interface between the active crystal plane and an electrolytic solution, thereby improving the structural stability of the surface of the positive active material. On the other hand, due to the relatively small interplanar spacing d1 of the (003) plane, the first material poses a relatively low resistance to the lithium ions transported in the first material, and provides a relatively high lithium-ion conductivity, thereby reducing interfacial charge transfer resistance of the positive active material and helping to improve both cycle performance and kinetic performance of the electrochemical device.

In some embodiments of this application, $d1 < 4.7340$ Å, and $4.7340$ Å $\leq d2 \leq 4.7650$ Å. By controlling the values of d1 and d2 within the foregoing ranges, the structural stability of the surface of the positive active material and the lithium-ion conductivity can be improved, thereby improving the cycle performance of the electrochemical device under high temperatures and high voltages.

In some embodiments of this application, based on a number of moles of metal elements other than Li in the shell layer, a molar percent of an element Al in the shell layer is X1; based on a number of moles of metal elements other than Li in the core, a molar percent of an element Al in the core is X2, satisfying: $X1 > X2$. On the one hand, it helps to improve the structural stability of a region uncovered with the first material on the surface of the matrix. On the other hand, due to relatively high stability of the shell layer, it helps to enhance the interfacial stability between the matrix and the first material, reduce the risks of obstructed transport of lithium ions between the matrix and the first material caused by interface failure, and in turn, improve the cycle performance of the electrochemical device under high temperatures and high voltages.

In some embodiments of this application, $1.5\% \leq X1 \leq 3\%$. In some embodiments of this application, $X2 \leq 1.5\%$.

In some embodiments of this application, the first material includes an element Co. Based on a number of moles of metal elements other than Li in the first material, a molar percent of the element Co in the first material is C1; based on a number of moles of metal elements other than Li in the matrix, a molar percent of the element Co in the matrix is C2; satisfying: $C1 > C2$. This helps to further reduce the interfacial charge transfer resistance of the positive active material, and in turn, improve the kinetic performance of the electrochemical device.

In some embodiments of this application, a total number of moles of metal elements other than Li in the core is $n_{M1}$, a number of moles of an element Ni in the core is $n_{Ni1}$, a number of moles of an element Co in the core is $n_{Co1}$, a number of moles of an element Mn in the core is $n_{Mn1}$, a number of moles of an element Al in the core is $n_{A1}$, a number of moles of an element R in the core is $n_{R1}$, $0.5 \leq n_{Ni1}/n_{M1} < 1$, $0 \leq n_{Co1}/n_{M1} \leq 0.2$, $0 \leq n_{Mn1}/n_{M1} \leq 0.5$, $0 < n_{A1}/n_{M1} \leq 0.03$, $0 \leq n_{R1}/n_{M1} \leq 0.05$, and the element R includes at least one of Mg, Ti, Zr, Nb, Y, Cr, V, Ge, Mo, Fe, Cu, Zn, Ga, Ag, W, In, Sn, Pb, Sb, La, Ce, Ca, or Sr.

In some embodiments of this application, a total number of moles of metal elements other than Li in the first material is $n_{M2}$, a number of moles of an element Ni in the first material is $n_{Ni2}$, a number of moles of an element Co in the first material is $n_{Co2}$, a number of moles of an element Z in the first material is $n_Z$, a number of moles of an element R in the first material is $n_{R2}$, $0 \leq n_{Ni2}/n_{M2} \leq 0.6$, $0.25 \leq n_{Co2}/n_{M2} \leq 1.0$, $0 \leq n_Z/n_{M2} \leq 0.1$, $0 \leq n_{R2}/n_{M2} \leq 0.05$, the element Z includes at least one of Mn or Al, and the element R includes at least one of Mg, Ti, Zr, Nb, Y, Cr, V, Ge, Mo, Fe, Cu, Zn, Ga, Ag, W, In, Sn, Pb, Sb, La, Ce, Ca, or Sr.

The use of the foregoing core and/or first material helps to improve both the cycle performance and kinetic performance of the electrochemical device.

In some embodiments of this application, $n_{Co2}/n_{M2} - n_{Co1}/n_{M1} \geq 0.25$. By controlling the value of $n_{Co2}/n_{M2} - n_{Co1}/n_{M1}$ within the foregoing range, it helps to reduce the interfacial charge transfer resistance of the positive active material, and thereby, improving the kinetic performance of the electrochemical device.

In some embodiments of this application, viewed along a first direction, an area percent of the first material is 10% to 80% based on an area of the positive active material. The first direction is a direction of observing by using an instrument (such as a scanning electron microscope). Controlling the area percent of the first material within the foregoing range improves the structural stability of the surface of the positive active material and the lithium-ion conductivity, and thereby, improves the cycle performance of the electrochemical device under high temperatures and high voltages. Further, viewed along a first direction, the area percent of the first material is 20% to 75% based on the area of the positive active material.

In some embodiments of this application, an average particle diameter of the first material is 50 nm to 800 nm. Controlling the average particle diameter of the first material within the foregoing range helps to improve the specific surface area of the first material, and in turn, helps to improve the kinetic performance of the electrochemical device.

In some embodiments of this application, a thickness of the shell layer is 5 nm to 80 nm. Controlling the thickness of the shell layer within the foregoing range improves the structural stability of a region uncovered with the first material on the surface of the matrix, and in turn, helps to improve the cycle performance of the electrochemical device.

In some embodiments of this application, a specific surface area of the positive active material is less than or equal to 0.65 $m^2/g$. Controlling the specific surface area of the positive active material within the foregoing range helps to reduce side reactions on the surface of positive active materials, and in turn, helps to improve the cycle performance of the electrochemical device.

In some embodiments of this application, an average particle size of the matrix is 2 $\mu$m to 11 $\mu$m.

In some embodiments of this application, the matrix includes secondary particles. Each secondary particle is formed of primary particles. An average particle size of the primary particles is 1.5 $\mu$m to 4.0 $\mu$m. Controlling the average particle size of the primary particles within the foregoing range helps to improve the kinetic performance of the electrochemical device.

A second aspect of this application provides an electrochemical device containing the positive active material described in any embodiment of this application. The positive active material according to this application exhibits high structural stability and possesses a relatively low interfacial charge transfer resistance, so that the electrochemical device according to this application is excellent in cycle performance and kinetic performance.

A third aspect of this application provides an electronic device. The electronic device includes the electrochemical device according to any embodiment of this application. The electrochemical device according to this application is excellent in cycle performance and kinetic performance, so that the electronic device according to this application is excellent in longevity and performance.

This application provides a positive active material. The positive active material includes a matrix and a first material existing on a surface of the matrix. The matrix includes a core and a shell layer. An interplanar spacing d1 of a (003) plane of the first material is less than an interplanar spacing d2 of a (003) plane of the core. By controlling the interplanar spacing d1 of the (003) plane of the first material to be less than the interplanar spacing d2 of the (003) plane of the core, the structural stability of the surface of the positive active material can be improved, and an interfacial charge transfer resistance of the positive active material can be reduced, thereby helping to improve both cycle performance and kinetic performance of the electrochemical device.

**BRIEF DESCRIPTION OF DRAWINGS**

To describe the technical solutions in the embodiments of this application more clearly, the following outlines the drawings to be used in the embodiments. Evidently, the drawings outlined below show merely a part of embodiments of this application.

FIG. 1 is a schematic structural diagram of a positive active material according to some embodiments of this application;
FIG. 2 is a scanning electron microscope image of a positive active material according to Embodiment 2-1 of this application; and
FIG. 3 is a transmission electron microscope and energy dispersive spectrometer (EDS) image of a cross-section of a positive active material according to Embodiment 2-1 of this application.

## DETAILED DESCRIPTION OF EMBODIMENTS

To make the objectives, technical solutions, and advantages of this application clearer, the following describes this application in more detail with reference to drawings and embodiments. Evidently, the described embodiments are merely a part of but not all of the embodiments of this application. All other embodiments derived by a person of ordinary skill in the art based on the embodiments of this application fall within the protection scope of this application.

It is hereby noted that in specific embodiments of this application, this application is construed by using a lithium-ion battery as an example of the electrochemical device, but the electrochemical device according to this application is not limited to the lithium-ion battery.

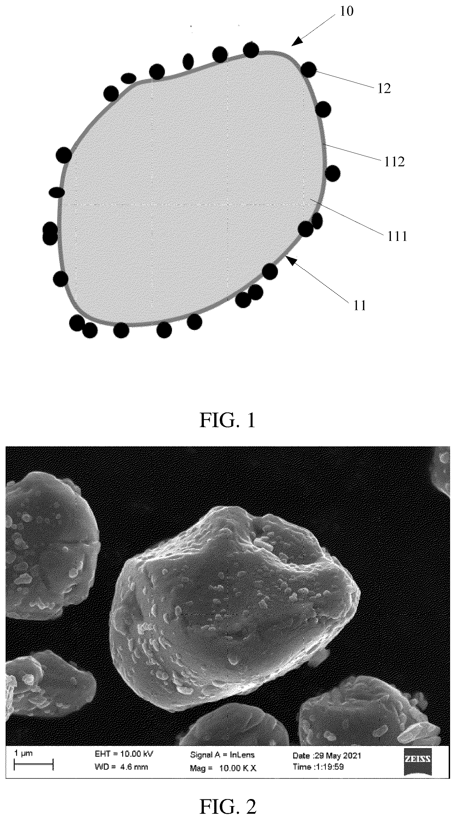

A first aspect of this application provides a positive active material. As shown in FIG. 1, the positive active material 10 includes a matrix 11 and a first material 12 existing on a surface of the matrix 11. The matrix 11 includes a core 111 and a shell layer 112. An interplanar spacing d1 of a (003) plane of the first material is less than an interplanar spacing d2 of a (003) plane of the core. Without being limited to any theory, the inventor hereof finds that, by controlling the interplanar spacing d1 of the (003) plane of the first material to be less than the interplanar spacing d2 of the (003) plane of the core, it helps to reduce a risk of phase transition failure of an active crystal plane that provides a lithium ion channel at an interface between the active crystal plane and an electrolytic solution, thereby improving structural stability of the surface of the positive active material. In addition, the first material with a relatively small interplanar spacing d1 poses a relatively low resistance to the lithium ions transported in the first material, reducing interfacial charge transfer resistance of the positive active material, thereby helping to improve both cycle performance and kinetic performance of the electrochemical device, for example, reducing the impedance of the electrochemical device, and improving the cycling capacity retention rate of the electrochemical device under high temperatures and high voltages. In addition, on the basis that the cycle performance and the kinetic performance of the electrochemical device are improved, the electrochemical device can provide a higher reversible charge-and-discharge capacity under high voltages, thereby helping to increase the energy density of the electrochemical device.

In some embodiments of this application, $d1 < 4.7340$ Å, and $4.7340$ Å $\leq d2 \leq 4.7650$ Å, and preferably $4.6910$ Å $\leq d1 < 4.7340$ Å, and $4.7500$ Å $\leq d2 \leq 4.7650$ Å. For example, the value of d1 may be $4.6910$ Å, $4.6950$ Å, $4.7000$ Å, $4.7100$ Å, $4.7200$ Å, $4.7300$ Å, $4.7339$ Å, or a range formed by any two thereof; and the value of d2 may be $4.7340$ Å, $4.7400$ Å, $4.7500$ Å, $4.7600$ Å, $4.7650$ Å, or a range formed by any two thereof. By controlling the values of d1 and d2 within the foregoing ranges, the structural stability of the surface of the positive active material and the lithium-ion conductivity can be improved, thereby improving the cycle performance of the electrochemical device under high temperatures and high voltages.

In some embodiments of this application, based on a number of moles of metal elements other than Li in the shell layer, a molar percent of an element Al in the shell layer is X1; based on a number of moles of metal elements other than Li in the core, a molar percent of an element Al in the core is X2, satisfying: X1 > X2. A relatively large amount of element Al introduced in the shell layer of the positive active material can reduce activity of two-coordinate oxygen on the surface of the shell layer of the positive active material in a high delithiation state, thereby suppressing irreversible phase transition and oxygen release on the surface of the shell layer during a high-voltage charge-and-discharge process of the electrochemical device, improving the structural stability of the surface of the positive active material in the high delithiation state, and in turn, improving the cycle performance of the electrochemical device under high voltages. In addition, with the element Al concentrated richly in the shell layer of the matrix, the stability of the shell layer is relatively higher, and helps to enhance the interfacial stability between the matrix and the first material, reduce the risks of obstructed transport of lithium ions between the matrix and the first material caused by interface failure, and in turn, improve the cycle performance of the electrochemical device under high temperatures and high voltages. In this application, the values of X1 and X2 are not particularly limited, as long as the objectives of this application can be achieved. For example, X1 is 1.5% to 3%, and X2 is 0% to 1.5%. In this application, the molar percents X1 and X2 of the element Al in the shell layer or the core can be obtained by analyzing and testing the cross-section of the positive active material particles using an energy dispersive spectrometer (EDS) in a transmission electron microscope.

In some embodiments of this application, the first material includes an element Co. Based on a number of moles of metal elements other than Li in the first material, a molar percent of the element Co in the first material is C1. Based on a number of moles of metal elements other than Li in the matrix, a molar percent of the element Co in the matrix is C2, satisfying: C1 > C2. The element Co richly concentrated in the first material of the positive active material helps to further reduce the interfacial charge transfer resistance of the positive active material, and in turn, improve the kinetic performance of the electrochemical device. The content of the element Co in the matrix is not particularly limited in this application, as long as the objectives of this application can be achieved. For example, based on the number of moles of metal elements other than Li in the first material, the molar percent C1 of the element Co in the first material is greater than or equal to 25%.

In some embodiments of this application, a total number of moles of metal elements other than Li in the core is $n_{M1}$, a number of moles of an element Ni in the core is $n_{Ni1}$, a number of moles of an element Co in the core is $n_{Co1}$,

a number of moles of an element Mn in the core is $n_{Mn1}$, a number of moles of an element Al in the core is $n_{A1}$, a number of moles of an element R in the core is $n_{R1}$, $0.5 \leq n_{Ni1}/n_{M1} < 1$, $0 \leq n_{Co1}/n_{M1} \leq 0.2$, $0 \leq n_{Mn1}/n_{M1} \leq 0.5$, $0 < n_{Al}/n_{M1} \leq 0.03$, $0 \leq n_{R1}/n_{M1} \leq 0.05$, and the element R includes at least one of Mg, Ti, Zr, Nb, Y, Cr, V, Ge, Mo, Fe, Cu, Zn, Ga, Ag, W, In, Sn, Pb, Sb, La, Ce, Ca, or Sr.

In some embodiments of this application, a total number of moles of metal elements other than Li in the first material is $n_{M2}$, a number of moles of an element Ni in the first material is $n_{Ni2}$, a number of moles of an element Co in the first material is $n_{Co2}$, a number of moles of an element Z in the first material is $n_Z$, a number of moles of an element R in the first material is $n_{R2}$, $0 \leq n_{Ni2}/n_{M2} \leq 0.6$, $0.25 \leq n_{Co2}/n_{M2} \leq 1.0$, $0 \leq n_Z/n_{M2} \leq 0.1$, $0 \leq n_{R2}/n_{M2} \leq 0.05$, the element Z includes at least one of Mn or Al, and the element R includes at least one of Mg, Ti, Zr, Nb, Y, Cr, V, Ge, Mo, Fe, Cu, Zn, Ga, Ag, W, In, Sn, Pb, Sb, La, Ce, Ca, or Sr.

The use of the foregoing core and/or first material helps to improve both the cycle performance and kinetic performance of the electrochemical device.

In some embodiments of this application, the core includes Al and R to enhance the stability of the core, and to suppress side reactions between the positive active material and the electrolytic solution when the positive active material is cracked, thereby helping to improve the cycle performance of the electrochemical device.

Illustratively, the core includes at least one of $LiNi_{0.5}Co_{0.1}Mn_{0.385}Al_{0.012}Zr_{0.002}Ti_{0.001}O_2$, $LiNi_{0.6}Co_{0.1}Mn_{0.288}Al_{0.012}O_2$, $LiNi_{0.8}Co_{0.1}Mn_{0.085}Al_{0.012}Zr_{0.003}O_2$, or $LiNi_{0.6}Co_{0.1}Mn_{0.285}Al_{0.012}Zr_{0.002}Ti_{0.001}O_2$.

Illustratively, the first material includes at least one of $LiNi_{0.5}Co_{0.45}Mn_{0.05}O_2$, $LiNi_{0.6}Co_{0.35}Mn_{0.05}O_2$, $LiCoO_2$, $LiNi_{0.5}Co_{0.45}Mn_{0.04}Al_{0.01}O_2$, or $LiNi_{0.5}Co_{0.45}Mn_{0.038}Al_{0.01}Ti_{0.001}O_2$.

In some embodiments of this application, $n_{Co2}/n_{M2} - n_{Co1}/n_{M1} \geq 0.25$, and preferably $0.25 \leq n_{Co2}/n_{M2} - n_{Co1}/n_{M1} \leq 0.9$. For example, the value of $n_{Co2}/n_{M2} - n_{Co1}/n_{M1}$ may be 0.25, 0.3, 0.4, 0.5, 0.6, 0.7, 0.8, 0.9, 1, or a range formed by any two thereof. Controlling the value of $n_{Co2}/n_{M2} - n_{Co1}/n_{M1}$ within the foregoing range helps to reduce the interfacial charge transfer resistance of the positive active material, and in turn, improve the kinetic performance of the electrochemical device.

In some embodiments of this application, viewed along a first direction, an area percent of the first material is 10% to 80% based on an area of the positive active material. Controlling the area percent of the first material within the foregoing range improves the structural stability of the surface of the positive active material and the lithium-ion conductivity, and in turn, improves the cycle performance of the electrochemical device under high temperatures and high voltages.

In some embodiments of this application, an average particle size of the first material is 50 nm to 800 nm. For example, the average particle size of the first material may be 50 nm, 100 nm, 200 nm, 300 nm, 400 nm, 500 nm, 600 nm, 700 nm, 800 nm, or a range formed by any two thereof. Controlling the particle size of the first material within the foregoing range helps to improve the specific surface area of the first material, and in turn, helps to improve the kinetic performance of the electrochemical device.

In some embodiments of this application, a thickness of the shell layer is 5 nm to 80 nm. For example, the thickness of the shell layer may be 5 nm, 10 nm, 20 nm, 30 nm, 40 nm, 50 nm, 60 nm, 70 nm, 80 nm, or a range formed by any two thereof. Controlling the thickness of the shell layer within the foregoing range improves the structural stability of a region uncovered with the first material on the surface of the matrix, and in turn, helps to improve the cycle performance of the electrochemical device.

In some embodiments of this application, an average particle size of the matrix is 2 $\mu$m to 11 $\mu$m. For example, the average particle size of the matrix may be 2 $\mu$m, 3 $\mu$m, 4 $\mu$m, 5 $\mu$m, 6 $\mu$m, 7 $\mu$m, 8 $\mu$m, 9 $\mu$m, 10 $\mu$m, 11 $\mu$m, or a range formed by any two thereof.

In some embodiments of this application, a specific surface area (BET) of the positive active material is less than or equal to 0.65 $m^2$/g, and further, is 0.4 $m^2$/g to 0.65 $m^2$/g. For example, the specific surface area of the positive active material may be 0.5 $m^2$/g, 0.55 $m^2$/g, 0.6 $m^2$/g, 0.65 $m^2$/g, or a range formed by any two thereof. Controlling the specific surface area of the positive active material within the foregoing range helps to reduce side reactions on the surface of positive active materials, and in turn, helps to improve the cycle performance of the electrochemical device.

In some embodiments of this application, the matrix includes secondary particles. Each secondary particle is formed of primary particles. An average particle size of the primary particles is 1.5 $\mu$m to 4.0 $\mu$m. For example, the average particle size of the primary particles may be 1.5 $\mu$m, 2.0 $\mu$m, 2.5 $\mu$m, 3.0 $\mu$m, 3.5 $\mu$m, 4.0 $\mu$m, or a range formed by any two thereof. Controlling the average particle size of the primary particles within the foregoing range helps to improve the kinetic performance of the electrochemical device. In this application, a primary particle means a single particle observed in an SEM image, and a secondary particle means a structure formed of a plurality of aggregated or agglomerated primary particles, and an obvious grain boundary exists between adjacent primary particles.

The method for preparing the positive active material is not particularly limited in this application, as long as the objectives of this application can be achieved. For example, the method for preparing the positive active material may include, but without being limited to the following steps: optionally adding the foregoing R-source solution into a mixed solution of a Ni source, a Co source, and an Mn source, and preparing a precursor by a co-precipitation method;

and then mixing the precursor with a lithium source, optionally adding an Al source and/or the foregoing R-source compound, and performing first sintering in an oxygen or air atmosphere, cooling, pulverizing, and sifting to obtain an intermediate product. The temperature and duration of the first sintering are not particularly limited in this application, as long as the objectives of this application can be achieved. For example, the sintering temperature is 780 °C to 1000 °C, and the sintering duration is 5 hours to 20 hours. The first material may be prepared by a preparation method known in the art. Then, mixing the intermediate product with the first material, optionally adding an Al source and/or the foregoing R-source compound, and performing second sintering in an oxygen or air atmosphere to obtain the positive active material. The temperature and duration of the second sintering are not particularly limited in this application, as long as the objectives of this application can be achieved. For example, the sintering temperature is 500 °C to 750 °C, and the sintering duration is 3 hours to 10 hours. The Al source is added in at least one of the first sintering step or the second sintering step.

During the preparation of the matrix, the temperature and/or duration of the first sintering usually affects the size of the primary particles. For example, with the increase of the temperature and/or duration of the first sintering, the size of the primary particles in the resulting matrix shows a tendency to increase. With the decrease of the temperature and/or duration of the first sintering, the size of the primary particles in the resulting matrix shows a tendency to decrease.

A second aspect of this application provides an electrochemical device containing the positive active material described in any embodiment of this application. The positive active material according to this application exhibits high structural stability and possesses a relatively low interfacial charge transfer resistance, so that the electrochemical device according to this application is excellent in cycle performance and kinetic performance.

The electrochemical device according to this application may include a positive electrode plate. The positive electrode plate is not particularly limited in this application, as long as the objectives of this application can be achieved. For example, the positive electrode plate generally includes a positive current collector. The positive current collector is not particularly limited in this application, as long as the objectives of this application can be achieved. For example, the positive current collector may include, but without being limited to, an aluminum foil, an aluminum alloy foil, a composite current collector, or the like. In this application, the thickness of the positive current collector is not particularly limited, as long as the objectives of this application can be achieved. For example, the thickness is 8 $\mu$m to 12 $\mu$m. In this application, the positive material layer may be disposed on one surface of the positive current collector in a thickness direction or on both surfaces of the positive current collector in the thickness direction. It is hereby noted that the "surface" here may be the entire region of the positive current collector, or a partial region of the positive current collector, without being particularly limited in this application, as long as the objectives of the application can be achieved.

In this application, the positive material layer includes the positive active material according to any embodiment of this application described above. The positive material layer may further include a positive binder. The positive binder is not particularly limited in this application, as long as the objectives of this application can be achieved. For example, the binder may include, but without being limited to, at least one of fluorine-containing resin, polypropylene resin, fiber-type binder, rubber-type binder, or polyimide-type binder.

In this application, the positive material layer may further include a conductive agent. The conductive agent is not particularly limited in this application, as long as the objectives of this application can be achieved. For example, the conductive agent may include, but without being limited to, at least one of conductive carbon black, carbon nanotubes (CNTs), carbon fibers, acetylene black, graphite, Ketjen black, graphene, a metal material, or a conductive polymer. The carbon nanotubes may include, but without being limited to, single-walled carbon nanotubes and/or multi-walled carbon nanotubes. The carbon fibers may include, but without being limited to, vapor grown carbon fibers (VGCF) and/or carbon nanofibers. The metal material may include, but without being limited to, metal powder and/or metal fibers. Specifically, the metal may include, but without being limited to at least one of copper, nickel, aluminum, or silver. The conductive polymer may include, but without being limited to, at least one of polyphenylene derivatives, polyaniline, polythiophene, polyacetylene, or polypyrrole.

The content of the positive active material, the positive binder, and the conductive agent is not particularly limited in this application, and a conventional content in the art may be employed, as long as the objectives of this application can be achieved. For example, based on the mass of the positive material layer, the mass percent of the positive active material is 90% to 98%, the mass percent of the positive binder is 0.5% to 5%, and the mass percent of the conductive agent is 0.5% to 5%.

Optionally, the positive electrode plate may further include a conductive layer. The conductive layer is located between the positive current collector and the positive material layer. The components of the conductive layer are not particularly limited in this application, and may be a conductive layer commonly used in the art. For example, the conductive layer may include, but without being limited to, the foregoing conductive agent and positive binder.

The electrochemical device according to this application may further include a negative electrode plate. The negative electrode plate is not particularly limited in this application, as long as the objectives of this application can be achieved. For example, the negative electrode plate generally includes a negative current collector and a negative material layer. In this application, the negative material layer may be disposed on one surface of the negative current collector in a thickness direction or on both surfaces of the negative current collector in the thickness direction. It is hereby noted that the "surface" here may be the entire region of the negative current collector, or a partial region of the negative current collector, without being particularly limited in this application, as long as the objectives of the application can be achieved.

The negative current collector is not particularly limited in this application, as long as the objectives of this application can be achieved. For example, the negative current collector may include, but without being limited to, a copper foil, a copper alloy foil, a nickel foil, a stainless steel foil, a titanium foil, foamed nickel, foamed copper, or a composite current collector, or the like. The thickness of the negative current collector is not particularly limited in this application, as long as the objectives of this application can be achieved. For example, the thickness is 4 $\mu$m to 12 $\mu$m.

In this application, the negative material layer includes a negative active material. The negative active material is not particularly limited, as long as the objectives of this application can be achieved. For example, the negative active material includes a carbon material that supports reversible intercalation and deintercalation of lithium ions. The carbon material may be a carbon material known in the art to for use as a negative active material. For example, the carbon material may include, but without being limited to, crystalline carbon and/or amorphous carbon. The crystalline carbon may include, but without being limited to, amorphous, flake-shaped, mini-flake-shaped, spherical, or fibrous natural graphite or artificial graphite. The non-crystalline carbon may include, but without being limited to, at least one of soft carbon, hard carbon, mesophase pitch carbide, or calcined coke. Illustratively, the negative active material may include, but without being limited to, natural graphite, artificial graphite, mesocarbon microbead (MCMB), hard carbon, soft carbon, silicon, silicon oxide ($SiO_x$, x is 1 or 2), or a silicon-carbon composite. In the silicon-carbon composite, a mass ratio between silicon and carbon is 1: 10 to 10: 1, and $D_{v50}$ is 0.1 $\mu$m to 100 $\mu$m.

In this application, the negative material layer may further include a conductive agent. The conductive agent is not particularly limited in this application, as long as the objectives of this application can be achieved. For example, the conductive agent may include, but without being limited to the foregoing conductive agents.

In this application, the negative material layer may further include a negative binder. The negative binder is not particularly limited in this application, as long as the objectives of this application can be achieved. For example, the negative binder may include, but without being limited to, at least one of polyvinyl alcohol, carboxymethyl cellulose, hydroxypropyl cellulose, diacetyl cellulose, polyvinyl chloride, carboxylated polyvinyl chloride, polyvinyl fluoride, a polymer containing ethylene oxide, polyvinylpyrrolidone, polyurethane, polytetrafluoroethylene, poly(1,1-difluoroethylene), polyethylene, polypropylene, polyacrylic acid, styrene-butadiene rubber, acrylic styrene-butadiene rubber, epoxy resin, or nylon.

Optionally, the negative electrode plate may further include a conductive layer. The conductive layer is located between the negative current collector and the negative material layer. The components of the conductive layer are not particularly limited in this application, and may be a conductive layer commonly used in the art. The conductive layer may include, but without being limited to, the foregoing conductive agent and the foregoing negative binder.

In this application, the electrochemical device may further include a separator. The separator is not particularly limited in this application, as long as the objectives of this application can be achieved. For example, the separator may include, but without being limited to, at least one of polyethylene (PE)-based, polypropylene (PP)-based, or polytetrafluoroethylene-based polyolefin (PO) separator, a polyester film (such as polyethylene terephthalate (PET) film), a cellulose film, a polyimide film (PI), a polyamide film (PA), a spandex or aramid film, a woven film, a non-woven film (non-woven fabric), a microporous film, a composite film, separator paper, a laminated film, or a spinning film, and preferably polyethylene or polypropylene. The polyethylene or polypropylene is highly effective in preventing a short-circuit, and can improve the stability of the electrochemical device by virtue of a turn-off effect. The separator according to this application may be a porous structure. The pore size of the separator is not particularly limited, as long as the objectives of this application can be achieved. For example, the pore size may be 0.01 $\mu$m to 1 $\mu$m. The thickness of the separator is not particularly limited in this application, as long as the objectives of this application can be achieved. For example, the thickness may be 5 $\mu$m to 500 $\mu$m.

For example, the separator may include a substrate layer and a surface treatment layer. The substrate layer may be a non-woven fabric, film or composite film, which, in each case, is porous. The material of the substrate layer may include, but without being limited to, at least one of polyethylene, polypropylene, polyethylene terephthalate, or polyimide. Optionally, the substrate layer may be a polypropylene porous film, a polyethylene porous film, a polypropylene non-woven fabric, a polyethylene non-woven fabric, or a polypropylene-polyethylene-polypropylene porous composite film. Optionally, the surface treatment layer is disposed on at least one surface of the substrate layer. The surface treatment layer may be a polymer layer or an inorganic compound layer, or a layer formed by mixing a polymer and an inorganic compound.

The inorganic compound layer may include, but without being limited to, inorganic particles and an inorganic compound layer binder. The inorganic particles are not particularly limited in this application, and may include, but without being limited to, at least one of aluminum oxide, silicon oxide, magnesium oxide, titanium oxide, hafnium dioxide, tin oxide, ceria, nickel oxide, zinc oxide, calcium oxide, zirconium oxide, yttrium oxide, silicon carbide, boehmite, aluminum hydroxide, magnesium hydroxide, calcium hydroxide, or barium sulfate. The inorganic compound layer binder is not particularly limited in this application, and may include, but without being limited to, at least one of polyvinylidene difluoride, poly(vinylidene difluoride-co-hexafluoropropylene), polyamide, polyacrylonitrile, polyacrylate, polyacrylic acid, polyacrylic acid sodium salt, polyvinylpyrrolidone, polyvinyl ether, poly methyl methacrylate, polytetrafluoroethylene, or polyhexafluoropropylene. The polymer layer includes a polymer, and the material of the polymer may include, but without being limited to, at least one of polyamide, polyacrylonitrile, acrylate polymer, polyacrylic acid, polyacrylate, polyvinylpyrrolidone, polyvinyl ether, polyvinylidene difluoride, or poly(vinylidene difluoride-hexafluoropropylene).

The electrochemical device according to this application may further include an electrolyte. The electrolyte may include, but without being limited to, one or more of a gel electrolyte, a solid-state electrolyte, or an electrolytic solution. The electrolytic solution may include a lithium salt and a nonaqueous solvent.

The lithium salt is not particularly limited in this application, as long as the objectives of this application can be achieved. For example, the lithium salt may include, but without being limited to, at least one of $LiPF_6$, $LiBF_4$, $LiAsF_6$, $LiClO_4$, $LiB(C_6H_5)_4$, $LiCH_3SO_3$, $LiCF_3SO_3$, $LiN(SO_2CF_3)_2$, $LiC(SO_2CF_3)_3$, $LiSiF_6$, LiBOB, or lithium difluoroborate. Preferably, the lithium salt includes $LiPF_6$.

The nonaqueous solvent is not particularly limited in this application, as long as the objectives of this application can be achieved. For example, the nonaqueous solvent may include, but without being limited to, at least one of a carbonate compound, a carboxylate compound, an ether compound, or other organic solvents. The carbonate compound may include, but without being limited to, at least one of a chain carbonate compound, a cyclic carbonate compound, or a fluorocarbonate compound. The chain carbonate compound may include, but without being limited to, at least one of dimethyl carbonate (DMC), diethyl carbonate (DEC), dipropyl carbonate (DPC), methyl propyl carbonate (MPC), ethylene propyl carbonate (EPC), or ethyl methyl carbonate (EMC). The cyclic carbonate compound may include, but without being limited to, at least one of ethylene carbonate (EC), propylene carbonate (PC), butylene carbonate (BC), or vinyl ethylene carbonate (VEC). The fluorocarbonate compound may include, but without being limited to, at least one of fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl ethylene, 1-fluoro-1-methyl ethylene carbonate, 1,2-difluoro-1-methyl ethylene carbonate, 1,1,2-trifluoro-2-methyl ethylene carbonate, or trifluoromethyl ethylene carbonate. The carboxylate compound may include, but without being limited to, at least one of methyl formate, methyl acetate, ethyl acetate, n-propyl acetate, tert-butyl acetate, methyl propionate, ethyl propionate, propyl propionate, $\gamma$-butyrolactone, decanolactone, valerolactone, mevalonolactone, or caprolactone. The ether compound may include, but without being limited to, at least one of dibutyl ether, tetraglyme, diglyme, 1,2-dimethoxyethane, 1,2-diethoxyethane, ethoxymethoxyethane, 2-methyltetrahydrofuran, or tetrahydrofuran. The other organic solvent may include, but without being limited to, at least one of dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, or phosphate ester.

The electrochemical device in this application is not particularly limited, and may be any device in which an electrochemical reaction occurs. In some embodiments, the electrochemical device may include, but without being limited to, a primary battery, a secondary battery, a fuel battery, a solar battery, a capacitor, or the like. Preferably, the electrochemical device may be a lithium secondary battery. The secondary battery may include, but without being limited to, a lithium metal secondary battery, a lithium-ion secondary battery, a lithium polymer secondary battery, a lithium-ion polymer secondary battery, or the like. More preferably, the electrochemical device is a lithium-ion battery.

The process of preparing the electrochemical device is well known to a person skilled in the art, and is not particularly limited in this application. For example, the preparation process may include, but without being limited to, the following steps: stacking the positive electrode plate, the separator, and the negative electrode plate in sequence, and performing operations such as winding and folding as required to obtain a jelly-roll electrode assembly; putting the electrode assembly into a package, injecting the electrolytic solution into the package, and sealing the package to obtain an electrochemical device; or, stacking the positive electrode plate, the separator, and the negative electrode plate in sequence, and then fixing the four corners of the entire stacked structure by use of adhesive tape to obtain a stacked-type electrode assembly, putting the electrode assembly into a package, injecting the electrolytic solution into the package, and sealing the package to obtain an electrochemical device. In addition, an overcurrent prevention element, a guide plate, and the like may be placed into the package as required, so as to prevent the rise of internal pressure, overcharge, and overdischarge of the electrochemical device.

A third aspect of this application provides an electronic device. The electronic device includes the electrochemical device according to any embodiment of this application. The electrochemical device according to this application is excellent in cycle performance and kinetic performance, so that the electronic device according to this application is excellent in longevity and operation performance.

The electronic device according to this application is not particularly limited, and may be any electronic device known in the prior art. In some embodiments, the electronic device may include, but is not limited to, a notebook computer, a pen-inputting computer, a mobile computer, an e-book player, a portable phone, a portable fax machine, a portable photocopier, a portable printer, a stereo headset, a video recorder, a liquid crystal display television set, a handheld cleaner, a portable CD player, a mini CD-ROM, a transceiver, an electronic notepad, a calculator, a memory card, a portable voice recorder, a radio, a backup power supply, a motor, a car, a motorcycle, a power-assisted bicycle, a power tool, an unmanned aerial vehicle, a handheld vacuum cleaner, a bicycle, a lighting appliance, a toy, a game console, a watch, an electric tool, a flashlight, a camera, a large household battery, a lithium-ion capacitor, and the like.

Embodiments

The implementations of this application are described below in more detail with reference to embodiments and comparative embodiments. Various tests and evaluations are performed in accordance with the following methods. In addition, unless otherwise specified, "proportion" and "%" are based on mass.

**Test Methods and Devices**

Testing the cycling capacity retention rate:

Performing first charging and discharging to a lithium-ion battery in a 45 °C environment. Charging the battery at a constant current of 1.5 C until the voltage reaches 4.35 V, and then charging the battery at a constant voltage until the current reaches 0.05 C. Subsequently, discharging the battery at a constant current of 4 C until the voltage finally reaches 2.8 V, thereby completing one cycle. Recording the discharge capacity as a first-cycle discharge capacity. Repeating the foregoing charge-and-discharge cycle 1000 times, and recording the $1000^{th}$-cycle discharge capacity. Cycling capacity retention rate = ($1000^{th}$ - cycle discharge capacity/first-cycle discharge capacity) $\times$ 100%.
Testing 4 lithium-ion batteries prepared in each embodiment or comparative embodiment, and averaging out the values to obtain a final result.

Testing the direct current resistance (DCR):

Testing the lithium-ion battery in a 25 °C environment according to the following steps:
(1) Leaving the battery to stand for 5 minutes; (2) discharging the battery at a constant current of 0.5 C until the voltage reaches 2.8 V; (3) leaving the battery to stand for 5 minutes; (4) charging the battery at a constant current of 1.5 C until the voltage reaches 4.25 V, and then charging the battery at a constant voltage until the current reaches 0.05 C; (5) leaving the battery to stand for 20 minutes; (6) discharging the battery at a constant current of 0.5 C until the voltage reaches 2.8 V (the actual discharge capacity measured is $C_{actual}$); (7) leaving the battery to stand for 5 minutes; (8) adjusting the oven temperature to 25 °C; (9) leaving the battery to stand for 60 minutes; (10) charging the battery at a constant current of 1.5 C until the voltage reaches 4.25 V, and then charging the battery at a constant voltage until the current reaches 0.05 C; (11) adjusting the oven temperature to 25 °C; (12) leaving the battery to stand for 60 minutes; (13) discharging the battery at a constant current of 0.1 C for 10 seconds (during which the voltage is sampled at intervals of 0.1 second); (14) discharging the battery at a constant current of 1 C for 360 seconds (during which the voltage is sampled at intervals of 0.1 second); (15) leaving the battery to stand for 120 minutes (during which the voltage is sampled at intervals of 30 seconds); (16) repeating steps (13) to (15) cyclically until the voltage is less than 2.7 V; and (17) leaving the battery to stand for 5 minutes.
The step (14) is to adjust the SOC. The SOC drops by 10% in each discharge step. When the discharge capacity of the battery is close to the $C_{actual}$, the battery is discharged for 10 seconds at a current of 0.1 C, the voltage at the end of this discharge step is denoted as Vi, then the battery is discharged at a constant current of 1 C for 360 seconds, during which the voltage at the end of 1 second discharging is denoted as $V_2$.

$$DCR = (V_1 - V_2)/(1\ C - 0.1\ C).$$

Testing the interplanar spacing of the (003) plane and the content of elements:
Fully discharging the lithium-ion battery at a current rate of 0.1 C until the voltage reaches 2.8 V, and leaving the battery to stand for 10 minutes. Subsequently, disassembling the battery in a glovebox to obtain a positive electrode plate. Moving the positive electrode plate into the chamber of a scanning electron microscope (Model: FEI Vion Plasma FIB) equipped with a focused ion beam, in which the positive electrode plate is processed to obtain a specimen suitable for being analyzed in a scanning transmission electron microscope (STEM, model: FEI Titan3 G2 60-300). Protecting the surface of the specimen with Pt, processing the specimen by using a Ga ion beam, and leaving the thickness of the specimen to be not greater than 100 nm. Cleaning the specimen in a low-voltage mode to remove the processing residues on the surface of specimen. Observing the specimen under the STEM. Taking images of lattice fringes in the first material and in the core of the matrix at an appropriate magnification. Measuring, by using image processing software, a distance between n lattice fringes in the first material, denoted as D1, and a distance between n lattice fringes in the core, denoted as D2. Therefore, the interplanar spacing of the (003) plane of the first material is d1 = D1/(n - 1), and the interplanar spacing of the (003) plane of the core is d2 = D2/(n - 1).

In addition, collecting data by use of an X-ray energy dispersive (EDS) analysis function at an appropriate magnification. Performing point-wise scanning at the core, shell layer, and the first material directly by use of the EDS energy spectrum to obtain the content of elements in the first material, core, and shell layer of the positive active material. Collect data from at least 3 different positions, and averaging out the values as a final result.

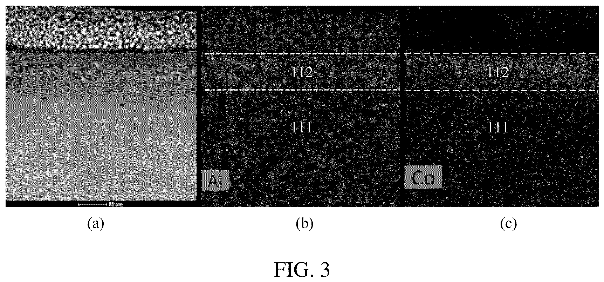

As shown in FIG. 3, (a) in FIG. 3 is a transmission electron microscope image of a cross-section of the positive active material in Embodiment 2-1; (b) and (c) in FIG. 3 are EDS element analysis images of the cross-section in (a); (b) in FIG. 3 shows the distribution of the element Al; and (c) in FIG. 3 shows the distribution of the element Co. As can be seen from (b) and (c) in FIG. 3, the Al content and the Co content in the shell layer 112 are greater than the Al content and the Co content in the core 111 respectively. Signals generated in the region above the shell layer 112 in (b) of FIG. 3 are interference signals generated by the Pt protection layer on the surface of the specimen.

Testing the thickness of the shell layer:

Observing the specimen under an STEM. Collecting data with an X-ray energy dispersive (EDS) analysis function at an appropriate magnification. Determining an interface between the core and the shell layer according to a difference in the concentration of the element Al. Measuring a distance from the surface of the matrix to this interface by using image processing software. Measuring 10 random points on the surface of the matrix, and averaging out the values as a final result.

Testing the average particle sizes of the first material and the matrix, and the area percent of the first material: Observing the positive active material under a scanning electron microscope (SEM). Taking SEM images at an appropriate magnification by using the observation direction as a first direction. Finding the longest diameters of 50 particles of the first material randomly on the surface of the matrix by using image processing software, and averaging out the values as an average particle size of the first material. Finding the longest diameters of 50 matrix particles randomly, and averaging out the values as an average particle size of the matrix.

Selecting 1 positive active material particle randomly by using the image processing software. Determining that the area of the positive active material particle as S, and that the total area of particles of the first material on the surface as S1, so that the area percent of the first material in the particles of the positive active material is S1/S. Measuring 50 particles of the positive active material randomly, and averaging out the values as the area percent of the first material.

**Embodiment 1-1**

<Preparing a positive active material>

(1) Mixing nickel sulfate, cobalt sulfate, and manganese sulfate in deionized water to prepare a mixed salt solution. Adding sodium hydroxide into the deionized water to prepare an alkaline solution. Using ammonia water as a complexant, and adding the salt solution, the alkaline solution, and the complexant into a reaction vessel. Adding aluminum sulfate to react. Controlling the reaction temperature to be 25 °C and the pH to be 11. Filtering the reaction slurry, washing, and drying after the particle size $D_{v50}$ reaches a preset value 4.5 μm, so as to obtain a precursor. The nickel sulfate, cobalt sulfate, manganese sulfate, and aluminum sulfate are added at a molar ratio of 0.5: 0.1: 0.385: 0.012 between Ni, Co, Mn, and Al.

(2) Mixing LiOH·H$_2$O, the precursor, ZrO$_2$, and TiO$_2$ at a molar ratio of 1.05: 0.997: 0.002: 0.001 between Li, Ni+Co+Mn+Al, Zr, and Ti. Adding the mixture into a high-speed mixer to mix well, and then adding the mixture into a saggar, and putting the saggar into a kiln to undergo first sintering under an oxygen atmosphere. Subsequently, mechanically pulverizing, airflow-pulverizing, and grading the sintered product to obtain a matrix precursor. In the first sintering, the sintering temperature is 930 °C and the sintering duration is 12 hours.

(3) Mixing the matrix precursor and the first material LiNi$_{0.5}$Co$_{0.45}$Mn$_{0.05}$O$_2$ to obtain a mixed material, and then adding the mixed material into a high-speed mixer. Mixing well and then adding the mixture into a saggar. Putting the saggar into a kiln to undergo second sintering in an oxygen atmosphere. Subsequently, mechanically pulverizing the sintered product, and grading, demagnetizing, and sifting the powder to obtain a positive active material. The mass ratio between the first material and the matrix precursor is 2: 100. The average particle size of the first material is 200 nm. In the second sintering, the sintering temperature is 600 °C, and the sintering duration is 6 hours. In the matrix, the core is LiNi$_{0.5}$Co$_{0.1}$Mn$_{0.385}$Al$_{0.012}$Zr$_{0.002}$Ti$_{0.001}$O$_2$.

<Preparing a positive electrode plate>

Mixing the positive active material prepared above, a conductive agent acetylene black and carbon nanotubes, a binder polyvinylidene difluoride at a mass ratio of 96: 1.2: 0.8: 2, adding N-methyl-pyrrolidone, and stirring the mixture well with a vacuum mixer to obtain a positive slurry, in which a solid content is 70 wt%. Coating one surface of a positive current collector aluminum foil with the positive slurry evenly, and drying the aluminum foil at 120 °C for 1 hour to obtain a positive electrode plate coated with a positive material layer on a single side. Repeating the foregoing steps on the other surface of the aluminum foil to obtain a positive electrode plate coated with the positive material layer on both sides. Subsequently, performing steps of cold calendering, cutting, and slitting to obtain a positive electrode plate.

<Preparing a negative electrode plate>

Mixing artificial graphite as a negative active material, styrene butadiene rubber as a binder, and sodium carboxymethyl cellulose as a thickener at a mass ratio of 97.4: 1.2: 1.4, adding deionized water, and stirring the mixture well with a vacuum mixer to obtain a negative slurry, in which a solid content is 75 wt%. Coating one surface of a negative current collector copper foil with the negative slurry evenly, and drying the copper foil at 120 °C to obtain a negative electrode plate coated with a negative material layer on a single side. Repeating the foregoing steps on the other surface of the copper foil to obtain a negative electrode plate coated with the negative material layer on both sides. Subsequently, performing steps of cold calendering, cutting, and slitting to obtain a negative electrode plate.

<Preparing an electrolytic solution>

Mixing propylene carbonate, ethylene carbonate, and diethyl carbonate at a mass ratio of 1: 1: 1 in an dry argon atmosphere glovebox to obtain an organic solvent, adding a lithium salt $LiPF_6$ into the organic solvent to dissolve, and stirring the mixture well to obtain an electrolytic solution. The mass percent of the $LiPF_6$ in the electrolytic solution is 12.5%.

<Preparing a separators

Using a 7 pm-thick porous polyethylene film as a separator.

<Preparing a lithium-ion battery>

Stacking the prepared positive electrode plate, the separator, and the negative electrode plate sequentially in such a way that the separator is located between the positive electrode plate and the negative electrode plate to serve a function of separation, and winding the stacked structure to obtain an electrode assembly. Putting the electrode assembly into an aluminum plastic film package, drying the packaged electrode assembly, and then injecting the electrolytic solution. Performing vacuum sealing, static standing, chemical formation, degassing, and edge trimming to obtain a lithium-ion battery.

**Embodiment 1-2**

Identical to Embodiment 1-1 except that the first material in step (3) of <Preparing a positive active material> is replaced with $LiNi_{0.6}Co_{0.35}Mn_{0.05}O_2$.

**Embodiment 1-3**

Identical to Embodiment 1-1 except that the first material in step (3) of <Preparing a positive active material> is replaced with $LiCoO_2$.

**Embodiment 1-4**

Identical to Embodiment 1-1 except: the molar ratio between Ni, Co, Mn, and Al in step (1) of <Preparing a positive active material> is 0.6: 0.1: 0.288: 0.012, neither $ZrO_2$ nor $TiO_2$ is added in step (2), the molar ratio between Li and Ni+Co+Mn+Al is 1.05: 1, and the core in the prepared matrix is $LiNi_{0.6}Co_{0.1}Mn_{0.288}Al_{0.012}O_2$.

**Embodiment 1-5**

Identical to Embodiment 1-1 except: the molar ratio between Ni, Co, Mn, and Al in step (1) of <Preparing a positive active material> is 0.8: 0.1: 0.085: 0.012, no $TiO_2$ is added in step (2), the molar ratio between Li, Ni+Co+Mn+Al, and Zr is 1.05: 0.997: 0.003, the temperature of the first sintering is 830 °C, the first material in step (3) is replaced with $LiNi_{0.6}Co_{0.35}Mn_{0.05}O_2$, and the core in the prepared matrix is $LiNi_{0.8}Co_{0.1}Mn_{0.085}Al_{0.012}Zr_{0.003}O_2$.

**Embodiment 2-1**

Identical to Embodiment 1-1 except that, in step (3) of <Preparing a positive active material>, the matrix precursor, $Al_2O_3$, and the first material $LiNi_{0.5}Co_{0.45}Mn_{0.05}O_2$ are mixed, and, based on the mass of the matrix precursor, the mass percent of Al in the $Al_2O_3$ is 0.2%.

A scanning electron microscope image of the positive active material prepared above is shown in FIG. 2, from which it can be seen that the first material is uniformly distributed on the surface of the matrix.

**Embodiment 2-2**

Identical to Embodiment 2-1 except that the first material in step (3) of <Preparing a positive active material> is replaced with $LiNi_{0.6}Co_{0.35}Mn_{0.05}O_2$.

**Embodiment 2-3**

Identical to Embodiment 2-1 except that the first material in step (3) of <Preparing a positive active material> is replaced with $LiCoO_2$.

**Embodiment 2-4**

Identical to Embodiment 2-1 except: the molar ratio between Ni, Co, Mn, and Al in step (1) of <Preparing a positive active material> is 0.6: 0.1: 0.288: 0.012, neither $ZrO_2$ nor $TiO_2$ is added in step (2), the molar ratio between Li and Ni+Co+Mn+Al is 1.05: 1, and the core in the prepared matrix is $LiNi_{0.6}Co_{0.1}Mn_{0.288}Al_{0.012}O_2$.

**Embodiment 2-5**

Identical to Embodiment 2-2 except: the molar ratio between Ni, Co, Mn, and Al in step (1) of <Preparing a positive active material> is 0.6: 0.1: 0.285: 0.012, the temperature of first sintering in step (2) is 910 °C, and the core in the prepared matrix is $LiNi_{0.6}Co_{0.1}Mn_{0.285}Al_{0.012}Zr_{0.002}Ti_{0.001}O_2$.

**Embodiment 2-6**

Identical to Embodiment 2-5 except that the first material in step (3) of <Preparing a positive active material> is replaced with $LiNi_{0.5}Co_{0.45}Mn_{0.05}O_2$.

**Embodiment 2-7 to Embodiment 2-9**

Identical to Embodiment 2-6 except that the first materials in step (3) of <Preparing a positive active material> in the three embodiments are replaced with $LiNi_{0.5}Co_{0.45}Mn_{0.04}Al_{0.01}O_2$, $LiNi_{0.5}Co_{0.45}Mn_{0.039}Al_{0.01}Ti_{0.001}O_2$, and $LiCoO_2$, respectively.

**Embodiment 2-10**

Identical to Embodiment 2-1 except: the molar ratio between Ni, Co, Mn, and Al in step (1) of <Preparing a positive active material> is 0.8: 0.1: 0.085: 0.012, no $TiO_2$ is added in step (2), the molar ratio between Li, Ni+Co+Mn+Al, and Zr is 1.05: 0.997: 0.003, the temperature of first sintering is 830 °C, and the core in the prepared matrix is $LiNi_{0.8}Co_{0.1}Mn_{0.085}Al_{0.012}Zr_{0.003}O_2$.

**Embodiment 2-11 and Embodiment 2-12**

Identical to Embodiment 2-10 except that the first materials in step (3) of <Preparing a positive active material> in the two embodiments are replaced with $LiNi_{0.6}Co_{0.35}Mn_{0.05}O_2$ and $LiCoO_2$ respectively.

**Embodiment 2-13**

Identical to Embodiment 2-6 except that, in step (3) of <Preparing a positive active material>, $Y_2O_3$ is added for sintering, and, based on the mass of the matrix precursor, the mass percent of Y in the $Y_2O_3$ is 0.1%.

**Embodiment 2-14**

Identical to Embodiment 2-6 except that, in step (3) of <Preparing a positive active material>, $TiO_2$ is added for sintering, and, based on the mass of the matrix precursor, the mass percent of Ti in the $TiO_2$ is 0.2%.

**Embodiment 2-15**

Identical to Embodiment 2-6 except that, in step (3) of <Preparing a positive active material>, $TiO_2$ and $WO_3$ are added for sintering, and, based on the mass of the matrix precursor, the mass percent of Ti in the $TiO_2$ is 0.2%, and the mass percent of W in the $WO_3$ is 0.2%.

**Embodiment 3-1 and Embodiment 3-2**

Identical to Embodiment 2-6 except that the temperature of first sintering in step (2) of <Preparing a positive active material> in the two embodiments is adjusted to 880°C and 930°C respectively so that the average particle size of the matrix is consistent with Table 3.

**Embodiment 3-3 to Embodiment 3-5**

Identical to Embodiment 2-6 except that the mass percent of Al in step (3) of <Preparing a positive active material> in the three embodiments is adjusted to 0.02%, 0.4%, and 0.8% respectively so that the thickness of the shell layer is consistent with Table 3.

**Embodiment 3-6 to Embodiment 3-9**

Identical to Embodiment 2-6 except that the average particle size of the first material in step (3) of <Preparing a positive active material> in the four embodiments is adjusted to 50 nm, 100 nm, 500 nm, and 800 nm respectively.

**Comparative Embodiment 1-1**

Identical to Embodiment 2-6 except that no first material is added in step (3) of <Preparing a positive active materials

Table 1 to Table 3 show the preparation parameters and performance test results of the embodiments and comparative embodiments.

**Table 1**

| | Core | First material | $n_{Co2}/n_{M2}-n_{Co1}/n_{M1}$ | d2 (Å) | d1 (Å) |
|---|---|---|---|---|---|
| Embodiment 1-1 | $LiNi_{0.5}Co_{0.1}Mn_{0.385}Al_{0.012}Zr_{0.002}Ti_{0.001}O_2$ | $LiNi_{0.5}Co_{0.45}Mn_{0.05}O_2$ | 0.35 | 4.7616 | 4.7289 |
| Embodiment 1-2 | $LiNi_{0.5}Co_{0.1}Mn_{0.385}Al_{0.012}Zr_{0.002}Ti_{0.001}O_2$ | $LiNi_{0.6}Co_{0.35}Mn_{0.05}O_2$ | 0.25 | 4.7616 | 4.7319 |
| Embodiment 1-3 | $LiNi_{0.5}Co_{0.1}Mn_{0.385}Al_{0.012}Zr_{0.002}Ti_{0.001}O_2$ | $LiCoO_2$ | 0.90 | 4.7616 | 4.6912 |
| Embodiment 1-4 | $LiNi_{0.6}Co_{0.1}Mn_{0.288}Al_{0.012}O_2$ | $LiNi_{0.5}Co_{0.45}Mn_{0.05}O_2$ | 0.35 | 4.7496 | 4.7289 |
| Embodiment 1-5 | $LiNi_{0.8}Co_{0.1}Mn_{0.085}Al_{0.012}Zr_{0.003}O_2$ | $LiNi_{0.6}Co_{0.35}Mn_{0.05}O_2$ | 0.25 | 4.7342 | 4.7299 |
| Embodiment 2-1 | $LiNi_{0.5}Co_{0.1}Mn_{0.385}Al_{0.012}Zr_{0.002}Ti_{0.001}O_2$ | $LiNi_{0.5}Co_{0.45}Mn_{0.05}O_2$ | 0.35 | 4.7616 | 4.7289 |
| Embodiment 2-2 | $LiNi_{0.5}Co_{0.1}Mn_{0.385}Al_{0.012}Zr_{0.002}Ti_{0.001}O_2$ | $LiNi_{0.6}Co_{0.35}Mn_{0.05}O_2$ | 0.25 | 4.7616 | 4.7319 |
| Embodiment 2-3 | $LiNi_{0.5}Co_{0.1}Mn_{0.385}Al_{0.012}Zr_{0.002}Ti_{0.001}O_2$ | $LiCoO_2$ | 0.90 | 4.7616 | 4.6912 |
| Embodiment 2-4 | $LiNi_{0.6}Co_{0.1}Mn_{0.288}Al_{0.012}O_2$ | $LiNi_{0.5}Co_{0.45}Mn_{0.05}O_2$ | 0.35 | 4.7496 | 4.7289 |
| Embodiment 2-5 | $LiNi_{0.6}Co_{0.1}Mn_{0.285}Al_{0.012}Zr_{0.002}Ti_{0.001}O_2$ | $LiNi_{0.6}Co_{0.35}Mn_{0.05}O_2$ | 0.25 | 4.7506 | 4.7319 |
| Embodiment 2-6 | $LiNi_{0.6}Co_{0.1}Mn_{0.285}Al_{0.012}Zr_{0.002}Ti_{0.001}O_2$ | $LiNi_{0.5}Co_{0.45}Mn_{0.05}O_2$ | 0.35 | 4.7506 | 4.7289 |
| Embodiment 2-7 | $LiNi_{0.6}Co_{0.1}Mn_{0.285}Al_{0.012}Zr_{0.002}Ti_{0.001}O_2$ | $LiNi_{0.5}Co_{0.45}Mn_{0.04}Al_{0.01}O_2$ | 0.35 | 4.7506 | 4.7219 |
| Embodiment 2-8 | $LiNi_{0.6}Co_{0.1}Mn_{0.285}Al_{0.012}Zr_{0.002}Ti_{0.001}O_2$ | $LiNi_{0.5}Co_{0.45}Mn_{0.039}Al_{0.01}Ti_{0.001}O_2$ | 0.35 | 4.7506 | 4.7229 |
| Embodiment 2-9 | $LiNi_{0.6}Co_{0.1}Mn_{0.285}Al_{0.012}Zr_{0.002}Ti_{0.001}O_2$ | $LiCoO_2$ | 0.90 | 4.7506 | 4.6912 |
| Embodiment 2-10 | $LiNi_{0.8}Co_{0.1}Mn_{0.085}Al_{0.012}Zr_{0.003}O_2$ | $LiNi_{0.5}Co_{0.45}Mn_{0.05}O_2$ | 0.35 | 4.7342 | 4.7289 |
| Embodiment 2-11 | $LiNi_{0.8}Co_{0.1}Mn_{0.085}Al_{0.012}Zr_{0.003}O_2$ | $LiNi_{0.6}Co_{0.35}Mn_{0.05}O_2$ | 0.25 | 4.7342 | 4.7299 |
| Embodiment 2-12 | $LiNi_{0.8}Co_{0.1}Mn_{0.085}Al_{0.012}Zr_{0.003}O_2$ | $LiCoO_2$ | 0.90 | 4.7342 | 4.6912 |
| Embodiment 2-13 | $LiNi_{0.6}Co_{0.1}Mn_{0.285}Al_{0.012}Zr_{0.002}Ti_{0.001}O_2$ | $LiNi_{0.5}Co_{0.45}Mn_{0.05}O_2$ | 0.35 | 4.7506 | 4.7289 |
| Embodiment 2-14 | $LiNi_{0.6}Co_{0.1}Mn_{0.285}Al_{0.012}Zr_{0.002}Ti_{0.001}O_2$ | $LiNi_{0.5}Co_{0.45}Mn_{0.05}O_2$ | 0.35 | 4.7506 | 4.7289 |
| Embodiment 2-15 | $LiNi_{0.6}Co_{0.1}Mn_{0.285}Al_{0.012}Zr_{0.002}Ti_{0.001}O_2$ | $LiNi_{0.5}Co_{0.45}Mn_{0.05}O_2$ | 0.35 | 4.7506 | 4.7289 |
| Comparative Embodiment 1-1 | $LiNi_{0.6}Co_{0.1}Mn_{0.285}Al_{0.012}Zr_{0.002}Ti_{0.001}O_2$ | / | / | 4.7506 | / |
| Note: "/" in Table 1 indicates nonexistence of the corresponding parameter or substance. | | | | | |

**Table 2**

| | X1 (%) | X2 (%) | X1/X2 | BET of positive active material (m²/g) | DCR (mOhm) | Cycling capacity retention rate (%) |
|---|---|---|---|---|---|---|
| Embodiment 1-1 | 1.2 | 1.2 | 1.00 | 0.524 | 2.46 | 85.4 |
| Embodiment 1-2 | 1.2 | 1.2 | 1.00 | 0.532 | 2.37 | 88.2 |
| Embodiment 1-3 | 1.2 | 1.2 | 1.00 | 0.542 | 2.18 | 90.3 |
| Embodiment 1-4 | 1.2 | 1.2 | 1.00 | 0.521 | 2.45 | 84.1 |
| Embodiment 1-5 | 1.2 | 1.2 | 1.00 | 0.534 | 2.78 | 81.1 |
| Embodiment 2-1 | 2.0 | 1.2 | 1.67 | 0.523 | 2.75 | 92.4 |
| Embodiment 2-2 | 2.0 | 1.2 | 1.67 | 0.543 | 2.90 | 91.0 |
| Embodiment 2-3 | 2.0 | 1.2 | 1.67 | 0.534 | 2.40 | 93.5 |
| Embodiment 2-4 | 2.0 | 1.2 | 1.67 | 0.551 | 2.75 | 86.4 |
| Embodiment 2-5 | 2.0 | 1.2 | 1.67 | 0.548 | 2.80 | 90.5 |
| Embodiment 2-6 | 2.0 | 1.2 | 1.67 | 0.550 | 2.65 | 91.2 |
| Embodiment 2-7 | 2.0 | 1.2 | 1.67 | 0.537 | 2.70 | 92.5 |
| Embodiment 2-8 | 2.0 | 1.2 | 1.67 | 0.562 | 2.75 | 92.9 |
| Embodiment 2-9 | 2.0 | 1.2 | 1.67 | 0.540 | 2.30 | 92.8 |
| Embodiment 2-10 | 2.0 | 1.2 | 1.67 | 0.546 | 2.50 | 87.1 |
| Embodiment 2-11 | 2.0 | 1.2 | 1.67 | 0.516 | 2.90 | 85.1 |
| Embodiment 2-12 | 2.0 | 1.2 | 1.67 | 0.526 | 2.20 | 89.5 |
| Embodiment 2-13 | 2.0 | 1.2 | 1.67 | 0.523 | 2.72 | 92.3 |
| Embodiment 2-14 | 2.0 | 1.2 | 1.67 | 0.541 | 2.62 | 92.7 |
| Embodiment 2-15 | 2.0 | 1.2 | 1.67 | 0.523 | 2.5 | 93.5 |
| Comparative Embodiment 1-1 | 2.0 | 1.2 | 1.67 | 0.534 | 3.55 | 68.5 |

As can be seen from Embodiments 1-1 to 1-5 and Comparative Embodiment 1-1, the surface of the matrix in Embodiments 1-1 to 1-5 is coated with the first material, and therefore, the cycling capacity retention rate is higher and the direct current resistance is lower when the lithium-ion battery is charged and discharged at a high rate under high-temperature and high-voltage conditions, indicating that both the cycle performance and kinetic performance of the lithium-ion battery are improved. Possible reasons are: On the one hand, the relatively small interplanar spacing d1 of the (003) plane of the first material reducesa risk of phase transition failure of an active crystal plane that provides a lithium ion channel at an interface between the active crystal plane and an electrolytic solution, thereby improving the structural stability of the surface of the positive active material. On the other hand, due to the relatively small interplanar spacing d1 of the (003) plane, the first material poses a relatively low resistance to the lithium ions transported in the first material, and provides a relatively high lithium-ion conductivity, reducing interfacial charge transfer resistance of the positive active material, and thereby helping to improve both cycle performance and kinetic performance of the lithium-ion battery.

As can be seen from Embodiments 1-1 to 1-5 and Embodiments 2-1 to 2-15, an Al-rich shell layer that is further disposed in the matrix can further significantly improve the cycle performance of the lithium-ion battery charged and discharged at a high rate under high temperatures and high voltages. Possible reasons are: with the Al-rich shell layer disposed, on the one hand, the Al-rich shell layer helps to improve the structural stability of a region uncovered with the first material on the surface of the matrix. On the other hand, due to relatively high stability of the shell layer, the Al-rich shell layer helps to enhance the interfacial stability between the matrix and the first material, reduce the risks of obstructed transport of lithium ions between the matrix and the first material caused by interface failure, and in turn, further improve the cycle performance of the lithium-ion battery under high temperatures and high voltages.

**Table 3**

| | X1 (%) | X2 (%) | X1/X2 | Thickness of shell layer (nm) | Average particle size of first material (nm) | Average particle size of matrix (μm) | Area percent of first material (%) | BET of positive active material (m²/g) | DCR | Cycling capacity retention rate (%) |
|---|---|---|---|---|---|---|---|---|---|---|
| Embodiment 2-6 | 2.0 | 1.2 | 1.67 | 20 | 200 | 2.4 | 38 | 0.550 | 2.65 | 91.2 |
| Embodiment 3-1 | 2.0 | 1.2 | 1.67 | 20 | 200 | 1.5 | 25 | 0.620 | 2.3 | 89.30 |
| Embodiment 3-2 | 2.0 | 1.2 | 1.67 | 20 | 200 | 4.0 | 65 | 0.430 | 2.87 | 93.10 |
| Embodiment 3-3 | 1.5 | 1.2 | 1.25 | 5 | 200 | 2.4 | 36 | 0.550 | 2.43 | 85.40 |
| Embodiment 3-4 | 2.5 | 1.2 | 2.08 | 40 | 200 | 2.4 | 35 | 0.541 | 2.75 | 91.70 |
| Embodiment 3-5 | 3 | 1.2 | 2.5 | 80 | 200 | 2.4 | 32 | 0.543 | 2.96 | 92.50 |
| Embodiment 3-6 | 2.0 | 1.2 | 1.67 | 20 | 50 | 2.4 | 75 | 0.551 | 2.54 | 88.70 |
| Embodiment 3-7 | 2.0 | 1.2 | 1.67 | 20 | 100 | 2.4 | 54 | 0.545 | 2.6 | 89.90 |
| Embodiment 3-8 | 2.0 | 1.2 | 1.67 | 20 | 500 | 2.4 | 21 | 0.545 | 2.85 | 89.30 |
| Embodiment 3-9 | 2.0 | 1.2 | 1.67 | 20 | 800 | 2.4 | 13 | 0.537 | 3.05 | 84.30 |

As can be seen from Embodiment 2-6, Embodiments 3-1 to 3-2, and Embodiments 3-6 to 3-9, by adjusting the relative size of the average particle size between the matrix and the first material, the area percent of the first material in the surface of the positive active material can be adjusted. When the area percent of the first material falls within the range of 20% to 65%, the cycle performance of the lithium-ion battery is higher. As can be seen from Embodiment 2-6 and Embodiments 3-3 to 3-5, a thicker shell layer leads to higher cycle performance of the lithium-ion battery.

What is described above is merely preferred embodiments of this application, but is not intended to limit this application. Any modifications, equivalent substitutions, and improvements made within the spirit and principles of this application still fall within the protection scope of this application.

**Claims**

1. A positive active material, comprising a matrix and a first material existing on a surface of the matrix, wherein the matrix comprises a core and a shell layer, and an interplanar spacing d1 of a (003) plane of the first material is less than an interplanar spacing d2 of a (003) plane of the core.

2. The positive active material according to claim 1, wherein $d1 < 4.7340$ Å, and $4.7340$ Å $\leq d2 \leq 4.7650$ Å.

3. The positive active material according to claim 1, wherein, based on a number of moles of metal elements other than Li in the shell layer, a molar percent of an element Al in the shell layer is X1, and, based on a number of moles of metal elements other than Li in the core, a molar percent of an element Al in the core is X2, satisfying: X1 > X2.

4. The positive active material according to claim 3, wherein $1.5\% \leq X1 \leq 3\%$, and/or $X2 \leq 1.5\%$.

5. The positive active material according to claim 1, wherein the first material comprises an element Co, and, based on a number of moles of metal elements other than Li in the first material, a molar percent of the element Co in the first material is C1, and, based on a number of moles of metal elements other than Li in the matrix, a molar percent of the element Co in the matrix is C2, satisfying: C1 > C2.

6. The positive active material according to claim 1, wherein the positive active material satisfies at least one of the following conditions:

   (a) a total number of moles of metal elements other than Li in the core is $n_{M1}$, a number of moles of an element Ni in the core is $n_{Ni1}$, a number of moles of an element Co in the core is $n_{Co1}$, a number of moles of an element Mn in the core is $n_{Mn1}$, a number of moles of an element Al in the core is $n_{Al}$, a number of moles of an element R in the core is $n_{R1}$, $0.5 \leq n_{Ni1}/n_{M1} < 1$, $0 \leq n_{Co1}/n_{M1} \leq 0.2$, $0 \leq n_{Mn1}/n_{M1} \leq 0.5$, $0 < n_{Al}/n_{M1} \leq 0.03$, $0 \leq n_{R1}/n_{M1} \leq 0.05$, and the element R comprises at least one of Mg, Ti, Zr, Nb, Y, Cr, V, Ge, Mo, Fe, Cu, Zn, Ga, Ag, W, In, Sn, Pb, Sb, La, Ce, Ca, or Sr; and
   (b) a total number of moles of metal elements other than Li in the first material is $n_{M2}$, a number of moles of an element Ni in the first material is $n_{Ni2}$, a number of moles of an element Co in the first material is $n_{Co2}$, a number of moles of an element Z in the first material is nz, a number of moles of an element R in the first material is $n_{R2}$, $0 \leq n_{Ni2}/n_{M2} \leq 0.6$, $0.25 \leq n_{Co2}/n_{M2} \leq 1.0$, $0 \leq n_Z/n_{M2} \leq 0.1$, $0 \leq n_{R2}/n_{M2} \leq 0.05$, the element Z comprises at least one of Mn or Al, and the element R comprises at least one of Mg, Ti, Zr, Nb, Y, Cr, V, Ge, Mo, Fe, Cu, Zn, Ga, Ag, W, In, Sn, Pb, Sb, La, Ce, Ca, or Sr.

7. The positive active material according to claim 6, wherein $n_{Co2}/n_{M2} - n_{Co1}/n_{M1} \geq 0.25$.

8. The positive active material according to claim 1, wherein the positive active material satisfies at least one of the following conditions:

   (c) viewed along a first direction, an area percent of the first material is 10% to 80% based on an area of the positive active material;
   (d) an average particle size of the first material is 50 nm to 800 nm;
   (e) a thickness of the shell layer is 5 nm to 80 nm; and
   (f) an average particle size of the matrix is 2 $\mu$m to 11 $\mu$m.

9. The positive active material according to claim 1, wherein a specific surface area of the positive active material is less than or equal to 0.65 m$^2$/g.

**10.** An electrochemical device, comprising the positive active material according to any one of claims 1 to 9.

**11.** An electronic device, comprising the electrochemical device according to claim 10.

FIG. 1

FIG. 2

(a)     (b)     (c)

FIG. 3

## INTERNATIONAL SEARCH REPORT

| International application No. |
| --- |
| **PCT/CN2021/137773** |

### A. CLASSIFICATION OF SUBJECT MATTER

H01M 4/525(2010.01)i; H01M 4/52(2010.01)i; H01M 4/505(2010.01)i; H01M 4/50(2010.01)i; H01M 10/0525(2010.01)i

According to International Patent Classification (IPC) or to both national classification and IPC

### B. FIELDS SEARCHED

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; WPABS; VEN; ENTXT; CNKI: 电池, 正极, 阴极, 核, 壳, 003, 晶面, 间距, 钴酸锂, LiCoO2, battery, positive electrode, cathode, core, shell, crystal plane, space, lithium cobalt oxide

### C. DOCUMENTS CONSIDERED TO BE RELEVANT

| Category* | Citation of document, with indication, where appropriate, of the relevant passages | Relevant to claim No. |
| --- | --- | --- |
| Y | CN 110247031 A (RUYUAN DONG YANG GUANG MATERIALS CO., LTD.) 17 September 2019 (2019-09-17)<br>  description, paragraphs 4-86, and figure 2 | 1-11 |
| Y | CN 111628149 A (GEM CO., LTD. et al.) 04 September 2020 (2020-09-04)<br>  description, paragraphs 2-23 | 1-11 |
| Y | CN 102088084 A (SHENGYUAN SCI-TECH CO., LTD.) 08 June 2011 (2011-06-08)<br>  description, paragraphs 2-40, and figure 1 | 1-11 |
| Y | CN 103985857 A (QINGDAO QIANYUN HIGH-TECH NEW MATERIAL CO., LTD.) 13 August 2014 (2014-08-13)<br>  description, paragraphs 2-60 | 1-11 |
| A | CN 108832089 A (CENTRAL SOUTH UNIVERSITY) 16 November 2018 (2018-11-16)<br>  entire document | 1-11 |
| A | KR 100578448 B1 (HAN, KYOO SEUNG et al.) 10 May 2006 (2006-05-10)<br>  entire document | 1-11 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 August 2022** | **31 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2021/137773**

| Patent document cited in search report | | | Publication date (day/month/year) | Patent family member(s) | Publication date (day/month/year) |
|---|---|---|---|---|---|
| CN | 110247031 | A | 17 September 2019 | None | |
| CN | 111628149 | A | 04 September 2020 | None | |
| CN | 102088084 | A | 08 June 2011 | None | |
| CN | 103985857 | A | 13 August 2014 | None | |
| CN | 108832089 | A | 16 November 2018 | None | |
| KR | 100578448 | B1 | 10 May 2006 | None | |

Form PCT/ISA/210 (patent family annex) (January 2015)